(19) Europäisches Patentamt
European Patent Office
Office européen des brevets

(11) Veröffentlichungsnummer: **0 041 687**
**B1**

# (12) EUROPÄISCHE PATENTSCHRIFT

(45) Veröffentlichungstag der Patentschrift: **31.07.85**

(51) Int. Cl.[4]: **C 08 F 214/26,** C 08 J 3/12 // (C08F214/26, 216:14)

(21) Anmeldenummer: **81104243.1**

(22) Anmeldetag: **03.06.81**

(54) **Rohpolymerisat-Pulver aus einem modifizierten Tetrafluorethylen-Polymerisat mit hohem Schüttgewicht und guter Rieselfähigkeit sowie Verfahren zu dessen Herstellung und dessen Verwendung.**

(30) Priorität: **06.06.80 DE 3021369**
**17.03.81 DE 3110193**

(43) Veröffentlichungstag der Anmeldung: **16.12.81 Patentblatt 81/50**

(45) Bekanntmachung des Hinweises auf die Patenterteilung: **31.07.85 Patentblatt 85/31**

(84) Benannte Vertragsstaaten: **BE DE FR GB IT NL**

(56) Entgegenhaltungen:
**EP - A - 0 001 420**
**FR - A - 2 224 493**
**GB - A - 1 116 210**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Sulzbach, Reinhard Albert, Dr., Kammererstrasse 10, D-8263 Burghausen/Salzach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

## Beschreibung

Die Erfindung betrifft ein körniges, rieselfähiges, aus der Schmelze nicht verarbeitbares Rohpolymerisat-Pulver eines Tetrafluorethylen-Polymerisates, bestehend aus 0,004 bis 0,075 Mol-% polymerisierten Einheiten eines Perfluoralkylvinylethers der Formel

$$CF_2{=}CF{-}O{-}R_f \qquad (I)$$

worin $R_f$ einen Perfluorethyl-, Perfluor-n-propyl- oder Perfluor-n-butyl-Rest bedeutet, und aus polymerisierten Tetrafluorethylen-Einheiten, mit einer spezifischen Oberfläche von 0,5 bis 4,5 $m^2/g$.

Die Erfindung betrifft ferner ein Verfahren zur Herstellung eines solchen Pulvers nach dem Verfahren der Suspensionspolymerisation. Derartige Rohpolymerisat-Pulver sind ohne weitere, die Kornstruktur verändernde Nachbehandlungsschritte für die Weiterverarbeitung nach dem Verfahren der Ram-Extrusion geeignet.

Die Ram-Extrusion ist ein kontinuierliches Pulver-Sinter-Extrusionsverfahren zur Herstellung endloser Rohre und Stäbe. Dabei wird ein Polytetrafluorethylen-Pulver durch einen Dosierautomaten in sich wiederholenden Zyklen in ein auf Sintertemperatur aufgeheiztes Rohr eingebracht, mit einem Kolben verdichtet und jeweils ein entsprechendes Stück im Sinterrohr weiterbefördert. Unter diesen Bedingungen sintert das Pulver zu einem einheitlichen extrudierten Formkörper zusammen.

Von einem gut ram-extrudierbaren Polytetrafluorethylen-Pulver wird ein möglichst gutes Fließverhalten gefordert, das heißt ein hohes Schüttgewicht und eine gute Rieselfähigkeit. Schlecht rieselfähige Pulver führen zu Schwierigkeiten bei der automatischen Produktdosierung sowie zu einer ungleichmäßigen Füllung und Verdichtung im Sinterrohr und damit zu einer unbefriedigenden Produktqualität des fertigen gesinterten Ram-Extrudats. Darüberhinaus ist ein möglichst hohes Schüttgewicht des Pulvers erstrebenswert, da der Ausstoß eines Ram-Extruders mit steigendem Schüttgewicht des eingesetzten Pulvers erhöht werden kann.

Zur Herstellung eines für die Ram-Extrusion geeigneten Pulvers wird üblicherweise ein hochmolekulares Tetrafluorethylen-Polymerisat als Ausgangsmaterial eingesetzt, das durch Suspensionspolymerisation in wäßrigem Medium in Gegenwart eines freie Radikale bildenden Initiators zugänglich ist.

Nach dem Verfahren der Emulsionspolymerisation hergestellte Pulver von Tetrafluorethylen-Polymerisaten sind generell für die Verarbeitung nach dem Verfahren der Ram-Extrusion wenig geeignet, da sie ein sehr weiches, empfindliches Korn besitzen und aufgrund ihres im Vergleich zu Suspensionspolymerisaten niedrigeren Molekulargewichtes Extrudate mit geringer mechanischer Festigkeit ergeben. Außerdem sind Emulsionspolymerisate in der Herstellung teurer als Suspensionspolymerisate und daher auch aus wirtschaftlichen Gründen als Material für die Ram-Extrusion diesen nicht ebenbürtig.

Die Suspensionspolymerisation des Tetrafluorethylens wird im allgemeinen so durchgeführt, daß man den mit einem Rührsystem ausgestatteten Polymerisationsreaktor mit einem wäßrigen Medium füllt, in dem ein freie Radikale bildender Katalysator, eine Puffersubstanz und gegebenenfalls eine geringe Menge eines fluorierten Emulgators gelöst ist. Die Luft im verbleibenden Gasraum des Reaktors wird sorgfältig entfernt und Tetrafluorethylen eingepreßt, wobei der Polymerisationsdruck zwischen 4 und 30 bar betragen kann. Nach dem Start der Polymerisation wird unter Konstanthaltung des Polymerisationsdruckes entsprechend der entstehenden Polymerisatmenge gasförmiges Tetrafluorethylen nachgespeist.

Dem Fachmann ist bekannt, daß die nach diesem üblichen Verfahren direkt aus dem Polymerisationsreaktor erhaltenen Suspensionspolymerisate des Tetrafluorethylens in Form faseriger, unregelmäßiger und für die meisten Verarbeitungszwecke zu grober Teilchen anfallen. Solche Rohpolymerisat-Pulver können aufgrund ihrer schlechten Rieselfähigkeit, ihres niedrigen Schüttgewichtes und ihres zu großen, mittleren Teilchendurchmessers, der in der Regel über 1500 μm liegt, nur unter größten Schwierigkeiten durch Ram-Extrusion zu einwandfreien Extrudaten verarbeitet werden.

Auf die Pulvereigenschaften, insbesondere das Schüttgewicht und die Rieselfähigkeit der unmodifizierten Suspensionspolymerisat-Pulver des Tetrafluorethylens kann durch die Reaktionsführung wie zum Beispiel Rührgeschwindigkeit, Temperatur, Druck, praktisch kaum Einfluß genommen werden. Durch Erhöhung der Rührgeschwindigkeit beispielsweise gelingt es zwar, den mittleren Teilchendurchmesser des Polymerisatpulvers zu reduzieren, gleichzeitig wird das Pulver jedoch faseriger, das Schüttgewicht geht zurück und die Rieselfähigkeit nimmt ab.

Es hat sich daher eingebürgert, daß man die primär aus der Polymerisation anfallenden, groben, faserigen, schlecht rieselfähigen Pulver von Suspensionspolymerisaten des Tetrafluorethylens einer zusätzlichen Nachbehandlung unterzieht, um die für eine glatte Weiterverarbeitung in Ram-Extrudern mit automatischer Dosierung erforderlichen Pulvereigenschaften zu erzeugen. Solche Nachbehandlungstechniken sind beispielsweise Naßmahl- oder Naßschneideprozesse, Feinmahlung mit anschließender Agglomerisation der feinen Teilchen oder Sinterung.

Für das Verfahren der Ram-Extrusion werden häufig vorgesinterte Polytetrafluorethylen-Pulver eingesetzt. Das Vorsintern erfolgt durch Erhitzen des Einzelkorns über den Kristallitschmelzpunkt des Polytetrafluorethylens hinaus, wobei die Rieselfähigkeit solcher vorgesinterter Pulver mittels Nachbehandlung erhöht werden kann, wie in der DE-OS 27 44 244 beschrieben. Die Verwendung von vorgesinterten Pulvern ist insbesondere zur Herstellung dünner Profile bei Extrusionsdrücken über 250 bar vorzuziehen. Nicht vorgesinterte Pulver führen bei hohen Extrusionsdrücken häufig zu der sogenannten »Tablettenbildung«, wobei die Trennflächen der einzelnen Dosierchargen als Fehlstellen optisch sichtbar werden.

Im Extrusionsdruckbereich unter 250 bar, der bei der Herstellung dicker Profile angewendet wird, bringt der Einsatz vorgesinterter Pulver hinsichtlich der Eigenschaften des Extrudates gegenüber nicht vorgesinterten Pulvern keine Vorteile. Nicht vorgesinterte Polymerisatpulver ergeben sogar in diesem Bereich Extrudate mit besseren mechanischen Eigenschaften. Es ist daher nicht sinnvoll, für die Herstellung dicker Profile durch Ram-Extrusion, die durch den Sinterschritt vergleichsweise teuren, vorgesinterten Polytetrafluorethylen-Pulver einzusetzen. Die unmittelbar aus dem Polymerisationsreaktor erhaltenen Suspensionspolymerisate des Tetrafluorethylens würden somit ein kostengünstiges Ausgangsmaterial für die Herstellung dicker Profile durch Ram-Extrusion darstellen, sofern es gelänge, das Polymerisationsgeschehen so zu steuern, daß direkt nicht-faserige Pulver mit möglichst hohem Schüttgewicht, guter Rieselfähigkeit und einem nicht zu groben, aber auch nicht zu feinen Korn erhalten werden und man somit auf die weiteren, die Pulvereigenschaften verbessernden, aber das Produkt verteuernden Arbeitsschritte, wie zum Beispiel Feinmahlung mit anschließender Agglomeration der feinen Teilchen, verzichten kann.

Es ist bekannt, die Eigenschaften von Suspensionspolymerisaten des Tetrafluorethylens durch Zusatz geringer Mengen fluorierter, copolymerisierbarer, ungesättigter Verbindungen zum gasförmigen Tetrafluorethylen während der Polymerisation zu modifizieren. Derartige Verfahren und die daraus resultierenden Pulver sind beschrieben in der US-PS 33 31 822, in der GB-PS 11 16 210 sowie in den deutschen Offenlegungsschriften 19 40 304, 23 25 562, 25 23 569 und 24 16 452.

Aus der US-PS 33 31 822 ist ein Verfahren bekannt, bei dem durch Copolymerisation von Tetrafluorethylen mit 0,1 bis 10 Gew.-% eines Perfluorolefins mit 3 bis 4 Kohlenstoffatomen Formpulver mit einem Schüttgewicht von 500 bis 700 g/l, einer verbesserten Fließfähigkeit und einer verminderten Neigung zum Verklumpen erhalten werden. Bei diesem Verfahren tritt die Verbesserung der Pulvereigenschaften unabhängig davon ein, ob das Perfluorolefin zu Beginn der Polymerisation vorgelegt oder in kleinen Mengen während der Polymerisation zudosiert wird. Wie aus dem Beispiel 1 dieser US-Patentschrift ersichtlich ist, besitzt das hergestellte Copolymerisat-Pulver einen mittleren Teilchendurchmesser von nur 200 μm. Solche feinen Pulver haben aufgrund ihres zu kleinen mittleren Teilchendurchmessers eine dadurch bedingte, unzureichende Rieselfähigkeit für eine Verarbeitung nach dem Verfahren der Ram-Extrusion, während sie für die dort angestrebte Preß-Sinter-Verarbeitung seinerzeit eine Verbesserung darstellten. Außerdem ist bekannt, daß der Einbau von Perfluorolefinen, wie beispielsweise Hexafluorpropylen, in Tetrafluorethylen-Polymerisate selbst in kleinen Mengen zu einer Minderung der thermischen Stabilität des Polymerisates führt. Dies gilt in gleicher Weise für die gemäß der deutschen Offenlegungsschrift 19 40 304 beziehungsweise 23 25 562 hergestellten, mit kleinen Mengen Hexafluorpropylen beziehungsweise Chlortrifluorethylen modifizierten Tetrafluorethylen-Polymerisatpulvern, die sich besonders zur Preß-Sinter-Verarbeitung unter Vermeidung des sogenannten »Kaltfließens« der erhaltenen Formkörper eignen sollen.

In der GB-PS 11 16 210 wird ein Verfahren zur Herstellung eines körnigen Suspensionspolymerisates beschrieben, bei dem Tetrafluorethylen mit 0,003 bis 1,5 Mol-% eines perfluorethylenischen Modifizierungsmittels umgesetzt wird, wobei neben Perfluorolefinen und Perfluor-[2-methylen-4-methyl-1,3-dioxolan] auch Perfluoralkylvinylether als Modifizierungsmittel eingesetzt werden. Auch im Falle des Zusatzes geringer Mengen von Perfluoralkylvinylethern tritt, ähnlich wie bei der Verwendung perfluorierter Olefine, eine Änderung in der Kornstruktur der Polymerisate ein, die faserigen Anteile des Pulvers gehen zurück und das Korn nimmt eine körnige, abgerundete Form an.

Der Einsatz solcher Perfluoralkylvinylether, insbesondere von Perfluorpropylvinylether, bietet gegenüber der Verwendung von Perfluorolefinen den Vorteil, daß die damit hergestellten Polymerisate eine den reinen Tetrafluorethylen-Polymerisaten vergleichbare thermische Stabilität besitzen. Gegenüber reinem oder mit geringen Mengen Modifizierungsmittel versehenem Polytetrafluorethylen wiederum haben Polymerisate, bestehend aus Tetrafluorethylen-Einheiten und 0,01 bis 0,2 Gew.-% Perfluorpropylvinylether-Einheiten, die Vorteile einer stark verminderten Deformation unter Last, einer erhöhten Zähigkeit, einer niedrigeren Viskosität der Schmelze und einer verbesserten Reißdehnung.

Wie aus den Beispielen III bis VI der GB-PS 11 16 210 (ursprüngliche Fassung) ersichtlich ist, gehen sowohl das Schüttgewicht als auch der mittlere Teilchendurchmesser ($d_{50}$-Wert) der erhaltenen Pulver mit steigendem Einbau an Perfluorpropylvinylether in das Polymerisat stark zurück. Solche feinteiligen Pulver besitzen ein ungenügendes Schüttgewicht und eine unzureichende Fließfähigkeit und können daher nach dem Verfahren der Ram-Extrusion nicht problemlos verarbeitet werden.

Tetrafluorethylen-Polymerisatpulver mit einem Gehalt an sehr geringen Mengen des Modifizierungsmittels Perfluorpropylvinylether (weniger als 0,0029 Mol-%) sind beschrieben in der DE-OS 25 23 569. Sie eignen sich nach der Mahlung vorzüglich für die Herstellung von Preß-Sinterblöcken und von Schälfolien, weisen jedoch die Nachteile einer höheren Deformation unter Last, einer höheren Schmelzviskosität sowie einer geringeren Zähigkeit der daraus hergestellten Extrudate auf. Vor allem zeigen die nach dem dort beschriebenen Verfahren unmittelbar aus der Polymerisation erhaltenen Pulver ein zu niedriges Schüttgewicht und einen zu großen mittleren Teilchendurchmesser, um direkt für

die Ram-Extrusion einsetzbar zu sein.

Schließlich ist es aus der DE-OS 24 16 452 bekannt, Formpulver von Tetrafluorethylenpolymerisaten mit einem Gehalt von 0,02 bis 0,26 Gew.-% eines Perfluoralkylvinylethers herzustellen, wobei die Suspensionspolymerisation in Gegenwart von 3 bis 200 TpM eines telogen inaktiven, fluorierten Emulgators durchgeführt wird. Die so hergestellten Formpulver, die speziell für die Preß-Sinter-Technik geeignet sein sollen, besitzen als Rohpolymerisat eine unregelmäßige, faserige Teilchenform und ein schlechtes Fließvermögen und sind als solche für die Ram-Extrusion ungeeignet.

Der Erfindung liegt die Aufgabe zugrunde, ein körniges, aus der Schmelze nicht verarbeitbares Pulver eines mit einer die Endeigenschaften der Ram-Extrudate verbessernden Menge an Perfluoralkylvinylether modifizierten Suspensionspolymerisats des Tetrafluorethylens mit verbesserten Fließeigenschaften, das heißt einem hohen Schüttgewicht, einer guten Rieselfähigkeit und einem sehr stabilen Korn zu schaffen, das sich für die Weiterverarbeitung nach dem Verfahren der Ram-Extrusion besonders gut eignet.

Der Erfindung liegt ferner die Aufgabe zugrunde, ein Verfahren zur Herstellung solcher Pulver zu finden, das es erlaubt, diese Eigenschaften direkt dem Rohpolymerisat zu geben, ohne daß irgendwelche, die Kornstruktur verändernden Nachbehandlungsschritte vor der Weiterverarbeitung zu Ram-Extrudaten erforderlich sind.

Zur Lösung dieser Aufgabe stellt die vorliegende Erfindung ein Rohpolymerisat-Pulver eines Tetrafluorethylen-Polymerisats der eingangs genannten Art zur Verfügung, das dadurch gekennzeichnet ist, daß es einen mittleren Teilchendurchmesser $d_{50}$ von 450 bis 1400 µm, ein Schüttgewicht von 670 bis 880 g/l, eine Rieselfähigkeit von 4,0 bis 2,5 s/50 g und eine Kornstabilität von 4,0 bis 2,5 s/50 g besitzt.

Die erfindungsgemäßen Rohpolymerisat-Pulver, die direkt aus dem Polymerisationsprozeß ohne die Kornstruktur verändernde Nachbehandlungsschritte gewonnen werden, bestehen aus Suspensionspolymerisaten des Tetrafluorethylens (im folgenden mit TFE abgekürzt) mit einem Gehalt von 0,004 bis 0,075 Mol-%, vorzugsweise von 0,008 bis 0,04 Mol-% an einpolymerisierten Einheiten eines Perfluoralkylvinylethers (PAVE) der Formel

$$CF_2{=}CF{-}O{-}R_f,$$

worin $R_f$ einen Perfluorethyl-, Perfluor-n-propyl- oder Perfluor-n-butyl-Rest bedeutet; der Rest gegen 100 besteht aus einpolymerisierten TFE-Einheiten. Bevorzugt ist der Perfluor-n-propyl-Rest. Es können auch Gemische solcher Ether anwesend sein.

Solche Suspensionspolymerisate des TFE sind von Copolymerisaten mit höherem Gehalt an PAVE, welche nach den für Thermoplaste üblichen Formgebungsmethoden aus der Schmelze verarbeitet werden können, generell zu unterscheiden. Diese Suspensionspolymerisate gehören vielmehr, ähnlich dem unmodifizierten Polytetrafluorethylen selbst, der Gattung der aus der Schmelze nicht verarbeitbaren TFE-Polymerisate an, für die spezielle Formgebungsverfahren entwickelt wurden, zu denen beispielsweise auch die Ram-Extrusion zählt. Aufgrund dieses relativ niedrigen Gehaltes an den genannten PAVE-Comonomeren, die in solchen TFE-Polymerisaten üblicherweise als Modifizierungsmittel bezeichnet werden, besitzen diese eine an das unmodifizierte Polytetrafluorethylen sich annähernde hohe Schmelzviskosität. Sie liegt für die den erfindungsgemäßen Pulvern zugrundeliegenden Polymerisate im Bereich von 1 bis 200 GPas, vorzugsweise 10 bis 100 GPas, gemessen bei 350°C. Weniger modifizierte oder unmodifizierte TFE-Polymerisate besitzen im Vergleich dazu eine noch höhere Schmelzviskosität. Die die erfindungsgemäßen Pulver ausmachenden modifizierten TFE-Polymerisate weisen eine spezifische Standard-Dichte im Bereich von 2,15 bis 2,18 auf, welche in diesem Bereich mit steigendem Gehalt an Modifizierungsmittel zunimmt.

Als Suspensionspolymerisate haben die erfindungsgemäßen Pulver eine körnige Morphologie und unterscheiden sich hierin prinzipiell von den Emulsionspolymerisaten, die in Gegenwart so hoher Mengen an Emulgator hergestellt wurden, daß sie nach beendeter Polymerisation in kolloidaler Verteilung im wäßrigen Medium verbleiben. Die aus solchen kolloidalen Dispersionen durch Fällung gewonnenen sogenannten Feinpulver sind aus Agglomeraten kolloidaler Primärteilchen mit einem mittleren Teilchendurchmesser von etwa 0,1 bis 0,5 µm aufgebaut. Sie sind, wie dem Fachmann bekannt, nicht nach der Technik der Ram-Extrusion oder Preß-Sinter-Verarbeitung zu verformen, auch dann nicht, wenn sie Modifizierungsmittel enthalten.

Die erfindungsgemäßen Rohpolymerisat-Pulver dieser oben definierten modifizierten TFE-Polymerisate weisen folgende Eigenschaften auf, die in dieser Kombination bisher nicht verwirklicht worden sind:

- einem mittleren Teilchendurchmesser $d_{50}$ in dem für die Ram-Extrusion geeigneten Bereich von 450 bis 1400 µm, vorzugsweise von 600 bis 1200 µm,
- ein Schüttgewicht von 670 bis 880 g/l, vorzugsweise von 750 bis 880 g/l,
- eine Rieselfähigkeit von 4,0 bis 2,5 s/50 g, vorzugsweise von 3,5 bis 2,5 s/50 g,
- eine Kornstabilität von 4,0 bis 2,5 s/50 g, vorzugsweise von 3,5 bis 2,5 s/50 g.

Ein solches Pulver ist hinsichtlich seiner Eigenschaftsbereiche in bezug auf den mittleren Teilchen-

durchmesser $d_{50}$, das Schüttgewicht und die Rieselfähigkeit für die automatische Dosierung von Ram-Extrusionsanlagen hervorragend geeignet. Die erfindungsgemäßen Polymerisatpulver ergeben Ram-Extrudate mit einer Reißdehnung von 380 bis 560% bei einer Reißfestigkeit von 28 bis 32 $N/mm^2$. Extrudate mit solch hohen Reißdehnungswerten bei guten Reißfestigkeitswerten sind mit herkömmlichen TFE-Polymerisat-Pulvern nicht herstellbar.

TFE-Polymerisat-Pulver mit einem mittleren Teilchendurchmesser unter 450 $\mu$m, insbesondere unter 300 $\mu$m, sind, unabhängig von ihrer Zusammensetzung und ihrer Herkunft, für eine Verarbeitung nach dem Verfahren der Ram-Extrusion aufgrund ihres zu kleinen mittleren Teilchendurchmessers und die dadurch bedingte unzureichende Rieselfähigkeit wenig geeignet. Sehr grobe Polymerisatpulver, die in größerer Menge Polymerisatteilchen mit einem Durchmesser von mehr als 3000 $\mu$m enthalten, ermöglichen keine gleichmäßige Produktdosierung und Verdichtung bei der Verarbeitung durch Ram-Extrusion und führen zu Extrudaten mit Fehlstellen.

Die Preß-Sinterverarbeitung hingegen bevorzugt TFE-Polymerisat-Pulver mit einer mittleren Teilchengröße unter 450 $\mu$m.

Von Formpulvern aus bekannten TFE-Suspensions- und Emulsions-Polymerisaten, die zwecks Verbesserung des Fließverhaltens einer Nachbehandlung durch sogenannte Granulierungs- oder Agglomerationsprozesse unterzogen wurden, unterscheidet sich das erfindungsgemäße, nicht agglomerierte Pulver scharf durch seine Kornstabilität, die nach dem unten beschriebenen Kornstabilitäts-Test gemessen wird, bei dem eine mechanische Beanspruchung simuliert wird, indem man das Pulver unter genormten Bedingungen rührt und danach die Rieselfähigkeit des mechanisch beanspruchten Materials mißt. Während Pulver aus solchen Agglomerationsprozessen bei mechanischer Beanspruchung, die beispielsweise beim Transport oder bei der Dosierung in Verarbeitungsmaschinen auftreten kann wieder teilweise oder ganz in das Primärkorn zerfallen und dabei ihre Rieselfähigkeit ganz oder teilweise einbüßen, bleibt die Kornstruktur der erfindungsgemäßen Polymerisat-Pulver infolge ihrer besseren Kornstabilität erhalten.

Überraschenderweise wurde gefunden, daß sich solchermaßen gekennzeichnete erfindungsgemäße Pulver direkt aus dem Suspensionspolymerisations-Prozeß gewinnen lassen, wobei das Rohpolymerisat lediglich in üblicher Weise vom wäßrigen Polymerisationsmedium abgetrennt, gewaschen, getrocknet und von geringen Anteilen übergroßer Teilchen mit einem Teilchendurchmesser von $>3000$ $\mu$m getrennt wird. Das so gewonnene Rohpolymerisat-Pulver kann direkt für die Ram-Extrusion eingesetzt werden. Es bedarf keinerlei die Pulvereigenschaften verbessernder Nachbehandlungsschritte wie Naß- oder Trockenagglomerierung, Mahlen, Naßschneiden oder Vorsintern.

Dies wird ermöglicht durch das erfindungsgemäße Verfahren zur Herstellung eines körnigen, rieselfähigen, aus der Schmelze nicht verarbeitbaren Rohpolymerisat-Pulvers eines Tetrafluorethylen-Polymerisates der oben definierten Art durch Suspensionspolymerisation eines Monomerengemisches, bestehend aus einem Perfluoralkylvinylether der Formel

$$CF_2{=}CF{-}O{-}R_f \qquad (I)$$

worin $R_f$ eine Perfluorethyl-, Perfluor-n-propyl- oder Perfluor-n-butyl-Rest bedeutet, und aus Tetrafluorethylen, in wäßrigem Medium unter Rühren in Gegenwart üblicher, freie Radikale bildender Katalysatoren, Puffersubstanzen und gegebenenfalls von telogen inaktiven, fluorierten Emulgatoren in Mengen bis zu 40 TpM, sowie durch anschließende Abtrennung des pulverförmigen Polymerisats vom wäßrigen Medium und durch Abtrennung übergroßer Teilchen mit einem Teilchendurchmesser von größer als 3000 $\mu$m, das dadurch gekennzeichnet ist,daß

a) die Konzentration in der Gasphase an gasförmigem Perfluoralkylvinylether der Formel I im Monomerengemisch mit Tetrafluorethylen in dem Zeitraum bis zur Bildung von 1,5 Gew.-% Polymerisat-Feststoff, bezogen auf das wäßrige Medium, auf einen rechnerisch ermittelten Wert von 0,1 bis 1,0 Vol.-% eingestellt wird, und die Polymerisation dann unter Zuführung von Tetrafluorethylen und gegebenenfalls von Perfluoralkylvinylether der Formel I fortgesetzt wird, wobei die Gesamtmenge der zugeführten beiden Monomeren so zu bemessen ist, daß ein Polymerisat mit einem Gehalt von 0,004 bis 0,075 Mol-% an polymerisierten Perfluoralkylvinylether-Einheiten der Formel I und an polymerisierten Tetrafluorethylen-Einheiten gebildet wird,
b) die Polymerisation bei einem Gesamtdruck von 5 bis 11 bar durchgeführt wird, und
c) in einer Phase des Polymerisationsverlaufs, beginnend bei Bildung von 1,5 bis 3 Gew.-% und sich erstreckend bis zur Bildung von 8 bis 12 Gew.-% an Polymerisat-Feststoff, bezogen auf das wäßrige Medium, eine Rührerdrehzahl eingehalten wird, die einer spezifischen Leistungsaufnahme von 0,5 bis 1,5 Watt/l wäßriges Medium, gemessen im wäßrigen Medium vor dem Start der Polymerisation, entspricht.

Gemäß diesem erfindungsgemäßen Verfahren ist es in für den Fachmann nicht vorhersehbarer Weise möglich, den angestrebten Bereich für den mittleren Teilchendurchmesser $d_{50}$, für das Schüttgewicht und für die Rieselfähigkeit des resultierenden Rohpolymerisat-Pulvers festzulegen, und einzustellen durch die Wahl einer Kombination dreier Verfahrensparameter:

- einer rechnerischen Konzentration von 0,1 bis 1,0 Vol.-%, vorzugsweise von 0,1 bis 0,45 Vol.-% an den genannten PAVE-Monomeren im Monomerengemisch mit TFE, die in der Startphase der Polymerisation eingestellt wird, das heißt in der Phase, bis sich 1,5 Gew.-%des modifizierten TFE-Polymerisats, bezogen auf das Gewicht des wäßrigen Polymerisationsmediums, gebildet haben.
- Einhaltung eines relativ niedrigen Polymerisationsdrucks im Bereich von 5 bis 11 bar,
- der Einhaltung bestimmter Rührbedingungen in einer Phase des Polymerisationsverlaufs, beginnend bei Bildung von 1,5 bis 3 Gew.-%und sich erstreckend bis zur Bildung von 8 bis 12 Gew.-%an Polymerisat-Feststoff, bezogen auf das wäßrige Medium, wobei eine Rührerdrehzahl eingehalten wird, die einer spezifischen Leistungsaufnahme von 0,5 bis 1,5 Watt/l wäßriges Medium, gemessen im wäßrigen Medium vor dem Start der Polymerisation, entspricht.

Dies beinhaltet die überraschende Erkenntnis, daß die charakteristischen Pulvereigenschaften bei diesen TFE-Polymerisaten in einer kurzen Zeitspanne zu Beginn des Polymerisationsvorganges festgelegt werden können. Dabei kann der mittlere Teilchendurchmesser in Abhängigkeit von der rechnerischen Konzentration an PAVE in der Startphase der Polymerisation in einem sehr weiten Bereich gesteuert werden. Verhältnismäßig kleine Änderungen der Konzentration in Konzentrationsbereich von 0,1 bis etwa 0,45 Vol.-% führen zu großen Änderungen im mittleren Teilchendurchmesser, während vergleichsweise große Änderungen in der Konzentration im Konzentrationsbereich über 0,45 Vol.-% bis 1,0 Vol.-% nur noch kleine Änderungen im mittleren Teilchendurchmesser verursachen. Diese Zusammenhänge zwischen der rechnerischen Konzentration an PAVE und dem mittleren Teilchendurchmesser des Rohpolymerisat-Pulvers gelten unabhängig davon, ob die Änderung der Konzentration über den TFE-Druck, die zu Beginn der Polymerisation eingesetzte Menge an PAVE oder durch die geänderte Größe des freien Gasraums herbeigeführt wird. Es war ferner überraschend, daß festgestellt wurde, daß andere als Modifizierungsmittel bekannte Fluorolefine wie Hexafluorpropylen und Chlortrifluorethylen diesen Effekt nicht zeigen.

Nach dem in der GB-PS 11 16 210 beschriebenen Verfahren werden zwar durch Einsatz von Perfluoralkylvinylether Produkte mit einem runderen und feineren Korn erhalten im Vergleich zu Pulvern aus unmodifizierten Suspensionspolymerisaten des TFE. Es mußte jedoch in Kauf genommen werden, daß mit zunehmendem Einbau an Perfluoralkylvinylether in das Produkt der mittlere Teilchendurchmesser und das Schüttgewicht des Pulvers zwangsläufig so weit zurückgehen, daß Produkte mit unzureichender Rieselfähigkeit entstehen. Das erfindungsgemäße Verfahren hingegen ermöglicht eine Steuerung der Pulvereigenschaften trotz eines im gleichen Bereich liegenden Bruttogehaltes an Modifizierungsmittel des Gesamtpolymerisats.

Unter der rechnerischen Konzentration an PAVE in dem Monomerengemisch mit TFE in der Gasphase im Sinne dieser Erfindung wird verstanden diejenige Konzentration, die sich bei bekanntem freiem Gasraum des Polymerisationsgefäßes durch Einführung bestimmter Mengen an gasförmigem PAVE und TFE einstellt, ausgedrückt in Volumenprozent PAVE im gesamten Monomerengemisch, wobei ein Verhalten beider Monomerer als ideale Gase und deren vollständige Verdampfung angenommen wird und die Löslichkeiten im wäßrigen Medium vernachlässigt werden. Ermittelt man die effektiven Werte der eingestellten Konzentration im Gasraum analytisch, beispielsweise durch gaschromatographische Analyse, so fallen die Werte etwas niedriger aus als die rechnerisch ermittelten Konzentrationswerte.

Die Konzentration an gasförmigem PAVE im TFE in der Startphase der Polymerisation kann bei einer durch den gewünschten Einbau festgelegten Gesamtmenge an PAVE, wie sie oben definiert wurde, auf verschiedene Arten eingestellt werden:

- durch Wahl der zur Polymerisation eingesetzten Wassermenge und damit durch Wahl des Volumens des freien Gasraums im Polymerisationsreaktor bei gegebenem TFE-Druck und gegebener PAVE-Menge,
- durch Wahl des TFE-Drucks bei gegebener PAVE-Menge und gegebenem Gasraum-Volumen,
- durch Aufteilung der Gesamtmenge an PAVE, die für den Einbau im Gesamtpolymerisat erforderlich ist, wenn diese Gesamtmenge bei gegebenem Gasraum-Volumen und gegebenem TFE-Druck größer ist als es der benötigten Startkonzentration entspricht.

Der Einstellung der Konzentration durch Variation des im Reaktor vorhandenen freien Gasraums sind aus wirtschaftlichen Gründen gewisse Grenzen gesetzt. In der Regel ist man bestrebt, den freien Gasraum klein und das mit Wasser erfüllte Volumen groß zu halten, um dadurch eine möglichst gute Nutzung des vorhandenen Reaktorvolumens zu erzielen. Das Verhältnis von freiem Gasraum zu dem mit wäßrigem Polymerisationsmedium erfüllten Raum im Polymerisationsreaktor kann im allgemeinen im Bereich von 0,2 bis 1, vorzugsweise 0,3 bis 0,5, variiert werden.

Bei einer bestimmten, durch den gewünschten Einbau im Gesamtpolymerisat festgelegten Menge an PAVE und einem vorgegebenen freien Gasraum im Polymerisationsreaktor kann die Konzentration an PAVE in der Startphase der Polymerisation durch Wahl des TFE-Drucks variiert werden.

Die Wahl des TFE-Drucks hat dabei so zu erfolgen, daß der sich daraus zusammen mit PAVE aufbauende Gesamtdruck innerhalb der Grenzen für diesen zweiten wesentlichen Reaktionsparameter bewegt. Dieser Gesamt-Polymerisationsdruck soll im Bereich von 5 bis 11 bar, vorzugsweise von 7 bis

10 bar, liegen. Dieser relativ niedrig liegende Druckbereich stellt ein weiteres wesentliches Kriterium des erfindungsgemäßen Verfahrens dar, dessen Einfluß auf die resultierenden Eigenschaften des Suspensionspolymerisates nicht zu erwarten war.

Schließlich kann die zuzugebende Gesamtmenge an PAVE in zwei Teilmengen aufgeteilt werden, wenn die durch den gewünschten Einbau festgelegte Gesamtmenge an PAVE größer ist als die durch die Startkonzentration gegebene Menge, wobei:

- eine Teilmenge, die zur Einstellung der Konzentration an PAVE in der Startphase der Polymerisation und damit zur Festlegung der Korneigenschaft des Polymerisatpulvers dient, bei der Polymerisation zugesetzt wird, bevor sich 1,5 Gew.-% Polymerisat-Feststoff, bezogen auf wäßriges Medium, gebildet hat und
- eine Teilmenge, die praktisch keinen oder nur einen geringen Einfluß auf die Korneigenschaften hat, im weiteren Verlauf der Polymerisation kontinuierlich oder portionsweise zugeführt wird.

Die Zugabe der die Konzentration in der Startphase einstellenden Menge an PAVE muß nicht notwendigerweise im vollen Anteil oder überhaupt am Beginn oder vor dem Beginn der Polymerisation erfolgen. Die Einstellung der genannten Konzentrationen in der Startphase soll jedoch erfolgt sein, wenn sich 0,75 Gew.-% Polymerisat-Feststoff gebildet haben, und die so eingestellte Konzentration soll bis zur Bildung von 1,5 Gew.-% Polymerisat-Feststoff, jeweils bezogen auf wäßriges Medium, beibehalten werden. In einer bevorzugten Ausführungsform des erfindungsgemäßen Verfahrens wird diese Konzentration in der Startphase beim Start der Polymerisation eingestellt, und sie wird bis zur Bildung von 1,5 Gew.-% Polymerisat-Feststoff beibehalten. Dabei kann diese Konzentration etwa schwanken, wenn sie sich nur innerhalb des erfindungsgemäßen Konzentrationsbereichs bewegt.

Ferner wird das erfindungsgemäße Verfahren bevorzugt so durchgeführt, daß durch portionsweise oder kontinuierliche Zugabe von PAVE während der restlichen, auf die Startphase folgenden Polymerisationsdauer eine praktisch gleichbleibende Konzentration an PAVE im Monomerengemisch mit TFE aufrechterhalten wird.

Zur Herstellung der TFE-Polymerisate, aus denen die erfindungsgemäßen Pulver bestehen und die einen Gehalt von 0,004 bis 0,075 Mol-%, vorzugsweise von 0,008 bis 0,04 Mol-%, an einpolymerisierten Einheiten eines PAVE besitzen (was im Falle des Perfluor-n-propylvinylethers einem Gehalt von 0,01 bis 0,2 Gew.-%, vorzugsweise von 0,02 bis 0,1 Gew.-%, entspricht) ist es erforderlich, über die gesamte Polymerisationsdauer hinweg eine Gesamtmenge von 0,015 bis 0,15 Mol-%, vorzugsweise von 0,015 bis 0,075 Mol-%, an PAVE (was im Falle des Perfluor-n-propylvinylethers 0,04 bis 0,4 Gew.-%, vorzugsweise 0,04 bis 0,2 Gew.-%, entspricht), bezogen auf TFE, das bis zum gewünschten Feststoffgehalt verbraucht, das heißt zu Polymerisat umgesetzt wird, dem Polymerisationsgefäß zuzuführen.

Das erfindungsgemäße Verfahren wird bei einer Polymerisationstemperatur im Bereich von 50 bis 120° C, vorzugsweise von 60 bis 75° C durchgeführt. Als Katalysatoren werden übliche, für die Suspensionspolymerisation von Tetrafluorethylen-Polymerisaten verwendete Katalysatoren eingesetzt, insbesondere anorganische, wasserlösliche Peroxide oder übliche Redoxysysteme. Bevorzugt sind anorganische Persulfate, insbesondere Ammoniumpersulfat. Die Polymerisationsgeschwindigkeit liegt im üblichen Bereich von 50 bis 300, vorzugsweise von 60 bis 150 Gramm Polymerisat pro Liter wäßriges Medium und Stunde.

Der pH-Wert des wäßrigen Polymerisationsmediums kann durch Zusatz üblicher Puffersubstanzen, wie beispielsweise Ammoniumcarbonat, Ammoniumphosphat oder Borax reguliert werden. Der pH-Wert soll in dem für die Suspensionspolymerisation üblichen Bereich von 6 bis 9 liegen.

Beim erfindungsgemäßen Verfahren wird die Suspensionspolymerisation bis zu einem Feststoffgehalt im Bereich von 15 bis 50 Gew.-%, vorzugsweise von 25 bis 40 Gew.-%, Polymerisat-Feststoff, bezogen auf das Gewicht des wäßrigen Polymerisationsmediums, geführt. Es werden dabei Suspensionspolymerisate mit einer spezifischen Oberfläche erhalten, die im üblichen Bereich von Suspensionspolymerisaten des TFE liegt, nämlich von 0,5 bis 3 $m^2/g$, gemessen nach der BET-Methode, wobei dieser Wert insbesondere von der Gewichtsmenge an Polymerisat-Feststoff abhängt, die, bezogen auf die Gewichtsmenge wäßriges Polymerisationsmedium, gebildet wird. Gegebenenfalls können kleine Mengen an telogen inaktiven, fluorierten Emulgatoren (im Bereich von 1 bis 40 TpM), wie bekannt aus der DE-PS 11 09 370, zugegeben werden. Dadurch kann die spezifische Oberfläche auf Werte bis 4,5 $m^2/g$ angehoben werden. Solche telogen inaktiven fluorierten Emulgatoren sind insbesondere Alkali- und Ammoniumsalze von Perfluorcarbonsäuren, wie insbesondere Perfluoroctansäure.

Schließlich ist, wie unter c) definiert, die Rührintensität in einer ganz bestimmten Phase des Polymerisationsverlaufs relativ niedrig zu halten. Diese Rührintensität läßt sich ausdrücken durch die spezifische Leistungsaufnahme des Rührers, gemessen im wäßrigen Medium vor dem Start der Polymerisation. Diese zur Erzielung eines besonders hohen Schüttgewichts und eines sehr guten Fließverhaltens bezüglich der Rührintensität kritische Phase des Verlaufs der Suspensionspolymerisation beginnt bei einem Zeitpunkt, an dem sich 1,5 Gew.-% Polymerisat-Feststoff, bezogen auf wäßriges Polymerisationsmedium, gebildet haben. Sie endet, wenn 12 Gew.-% Feststoff, bezogen auf wäßriges Medium, gebildet worden sind. Während dieser Phase ist eine Rührerdrehzahl einzuhalten, die einer spezifischen Leistungsaufnahme im Bereich von 0,5 bis 1,5 W/l wäßriges Medium entspricht. Eine ausreichende

Verbesserung des Schüttgewichts und des Fließverhaltens wird auch noch erreicht, wenn man den Beginn dieser bezüglich der Rührintensität kritischen Phase von 1,5 Gew.-% auf 3 Gew.-% an gebildetem Polymerisat-Feststoff verschiebt und/oder ihr Ende von 12 Gew.-% auf 8 Gew.-% an gebildetem Polymerisat-Feststoff vorverlegt, jedoch fällt diese Verbesserung mit zunehmender Einengung dieser kritischen Phase auch zunehmend geringer aus.

Nach Beendigung dieser Phase, das heißt nach Bildung von 12 Gew.-% Polymerisat-Feststoff, bezogen auf wäßriges Medium, ist die Rührintensität für das Schüttgewicht und das Fließverhalten des resultierenden Rohpolymerisat-Pulvers unkritisch. Man kann mit der gleichen Rührerdrehzahl weiterrühren oder diese erhöhen bis zu Werten, die einer spezifischen Leistungsaufnahme von 20 W/l entsprechen, wenn dies beispielsweise aus Gründen einer verbesserten Wärmeabführung und/oder einer gleichmäßigeren Durchmischung wünschenswert ist. Vorzugsweise wird die Leistungsaufnahme erhöht (insbesondere um 0,5 bis 2,5 W/l wäßriges Medium erhöht gegenüber der kritischen Phase).

Vor Beginn der genannten kritischen Phase, das heißt vor dem Zeitpunkt der Bildung von 1,5 Gew.-% Polymerisat-Feststoff ist die Einhaltung der genannten Rührintensität gleichfalls unkritisch. Es können hier Rührerdrehzahlen gewählt werden, die höheren, gleichen oder auch niedrigeren Leistungsaufnahmen entsprechen als sie durch den genannten Bereich von 0,5 bis 1,5 W/l wäßriges Medium charakterisiert sind. Zweckmäßigerweise werden in dieser Startphase Rührerdrehzahlen eingestellt, die in ihrer entsprechenden Leistungsaufnahme, gemessen am wäßrigen Medium vor dem Start der Polymerisation, höher liegen (insbesondere um 0,5 bis 2,5 W/l wäßriges Medium höher) als diejenigen, die während der genannten kritischen Phase eingehalten werden. Dies hat den Vorteil eines rascheren Polymerisationsstarts. Gegebenenfalls sind auch noch höhere Rührintensitäten möglich. Die aus der spezifischen Leistungsaufnahme resultierende Drehzahl des Rührers ist naturgemäß abhängig von der Art und Füllhöhe des Polymerisationsgefäßes, von der Form und der Anzahl der Einbauten im Polymerisationsgefäß, wie beispielsweise Stromstörer, Temperaturmeßvorrichtungen und dergleichen, sowie ferner von der Gattung und Form des verwendeten Rührers. Die spezifische Leistungsaufnahme für eine bestimmte Drehzahl oder einen Drehzahlbereich des Rührers wird im wäßrigen Medium vor Beginn der Polymerisation bestimmt. Dazu wird folgendermaßen verfahren: Es wird die Leistungsaufnahme des Rührers bei verschiedenen Drehzahlen im leeren Polymerisationsreaktor in Watt gemessen. Dann wird das wäßrige Medium in der für die Suspensionspolymerisation nach dem erfindungsgemäßen Verfahren benötigten Menge eingefüllt und die Messung wiederholt. Die spezifische Leistungsaufnahme (SL) für eine bestimmte Rührerdrehzahl ergibt sich dann wie folgt:

$$SL\,(W/l) = \frac{L_{(gefüllt)}\,(W) - L_{(leer)}\,(W)}{\text{Füllmenge (l)}},$$

wobei $L_{(gefüllt)}$ und $L_{(leer)}$ die bei einer bestimmten Drehzahl gemessenen Leistungsaufnahmen in Watt im gefüllten und leeren Zustand des Polymerisationskessels sind.

Ist die Abhängigkeit der spezifischen Leistungsaufnahme von der Drehzahl für einen bestimmten Polymerisationsreaktor und einen bestimmten Rührer gemessen, so kann die Einhaltung der erfindungsgemäß geforderten spezifischen Leistungsaufnahme durch Einstellung eines entsprechenden Rührprogramms während des Verlaufs der Suspensionspolymerisation auf einfache Weise vorgenommen werden, wobei in der obengenannten, für Schüttgewicht und Fließverhalten kritischen Phase des Polymerisationsverlaufs eine Rührerdrehzahl eingestellt wird, die einer spezifischen Leistungsaufnahme des Rührers in dem erfindungsgemäß vorgeschriebenen Bereich entspricht.

Für die Polymerisation werden die üblichen Reaktoren, Stromstörer und Rührer verwendet. Es können beispielsweise Anker-, Scheiben-, Propeller-, Impeller- oder Paddelrührer verwendet werden. Bevorzugt sind Reaktoren, die mit einem Impellerrührer ausgestattet sind.

Eventuell bei der Polymerisation in untergeordneten Mengen entstandene Grobanteile mit einem Teilchendurchmesser von >3000 μm werden durch Sieben des Polymerisats vor dessen Weiterverarbeitung und vor der Bestimmung der Parameter des erfindungsgemäßen Pulvers abgetrennt. Diese Grobanteile liegen beim erfindungsgemäßen Verfahren bei höchstens 25 Gew.-%, in der Regel nicht über 15 Gew.-%.

Die in der Beschreibung und in den Beispielen angegebenen, die erfindungsgemäß hergestellten Pulver charakterisierenden Größen werden nach folgenden Meßmethoden bestimmt:

1. Schüttgewicht

   Die Bestimmung erfolgt nach Abtrennung der Grobanteile mit einem Teilchendurchmesser über 3000 μm nach DIN-Norm 53 468.

2. Mittlerer Teilchendurchmesser ($d_{50}$)

   Die Bestimmung erfolgt durch Siebanalyse nach der DIN-Norm 53 477 mit den in Tabelle III angegebenen Sieben bei einer Rüttelzahl von 15 min, wobei für die Bestimmung des mittleren

Teilchendurchmessers $d_{50}$ der Grobanteil mit Teilchendurchmessern >3000 μm außer Betracht bleibt.

3. Rieselfähigkeit

Ein mit Polytetrafluorethylen beschichteter Aluminiumtrichter mit einem inneren Durchmesser (oben) von 74 mm, einem inneren Durchmesser (unten) von 12 mm und einer Höhe von 89 mm ist an einem handelsüblichen Vibrator so befestigt, daß der Abstand vom Motorengehäuse des Vibrators bis zur Trichtermitte 90 bis 100 mm beträgt. In den Trichter werden 50 g Produkt eingefüllt, der Vibrator mit einer Schwingungsbreite von 0,5 bis 1 mm wird eingeschaltet, und es wird die Zeit von der Freigabe der Trichteröffnung bis zum gänzlichen Leerlaufen des Trichters gemessen. Die Rieselfähigkeit des Pulvers ist umso besser, je kürzer die Auslaufzeit ist. Vor Messung der Rieselfähigkeit werden die Grobanteile >3000 μm abgetrennt.

4. Kornstabilität

In einem Aluminiumbecher mit einem inneren Durchmesser von 100 mm und einer Höhe von 150 mm werden 50 g Pulver eingefüllt und 5 min bei 1000 U/min gerührt. Der mit zwei Flügeln ausgestattete Rührer wird über einen Stift und eine entsprechende Vertiefung im Boden des Bechers geführt. Der Abstand von Rührerblatt-Unterkante zum Boden beträgt 1,5 mm. Die Rührerblätter mit einer Dicke von 1,5 mm, einer Breite von 25 mm und einer Länge von 46 mm stehen in einem Winkel von 45° zur Rührerwelle und einem Winkel von 90° zueinander. Die Kanten der Flügelblätter sind leicht gerundet. Zur Vermeidung von elektrostatischer Aufladung wird dem Produkt ca. 0,1 g Aluminiumoxid vor Beginn des Rührens zugesetzt. Auch bei dieser Messung werden vorher die Grobanteile >3000 μm abgetrennt.
Von dem im Aluminiumbecher gerührten Produkt wird sodann die Rieselfähigkeit, wie unter 3. angegeben, bestimmt. Dieser nach mechanischer Beanspruchung erhaltene Rieselfähigkeitswert wird als Maß für die Kornstabilität herangezogen. Ein Vergleich des Rieselfähigkeitswertes des Pulvers vor und nach der Rührbehandlung erlaubt eine Aussage darüber, inwieweit das Korn bei der mechanischen Beanspruchung zerstört wurde.

5. Bestimmung des Gehaltes an PAVE

Der Gehalt an PAVE der erfindungsgemäß hergestellten Polymerisate kann durch Stoffbilanz ermittelt werden, indem man die dem Reaktor zugeführte Gesamtmenge, abzüglich der nach der Polymerisation im Reaktor verbleibenden Menge an monoremem PAVE bestimmt.
Ferner steht zur Verfügung eine Analysenmethode mit Hilfe der IR-Spektroskopie zur Bestimmung des Gehaltes an Perfluorpropylvinylether im Polymeren, die in der DE-OS 2 416 452 eingehend beschrieben wird.

6. Spezifische Oberfläche

Sie wird gemessen mit einem Gerät vom Typ Areatron (Hersteller: Fa. Leybold, Köln) nach der Methode von S. Brunauer, P. Emmet und E. Teller; siehe J. Amer. Chem. Soc., 60 (1938), Seite 309 (BET-Methode).

7. Spezifische Standard-Dichte

Die Bestimmung erfolgt an einem 4 bis 7 mm dicken Prüfkörper, der aus einem ramextrudierten Teil geschnitten wurde. Dieser Prüfkörper wird ca. 30 min auf 380°C erhitzt und anschließend bis auf 300°C mit einer Geschwindigkeit von 60°C/h abgekühlt. Ansonsten wird nach ASTM 1457— 56 T verfahren.

8. Spezifische Schmelzviskosität

Die Viskosität der Schmelze wird bestimmt an einem Prüfkörper mit 0,25 cm Breite, 0,65 cm Dicke und 5 cm Länge bei einer Temperatur von 350°C. Die Grundlagen des Meßverfahrens, bei dem die Dehnungsgeschwindigkeit unter einer bekannten Zugspannung gemessen wird, sind von Ajroldi et al. in J. Appl. Polym. Sci 14 (1970), S. 79 ff., beschrieben.

9. Reißfestigkeit und Reißdehnung

Die Bestimmung erfolgt nach ASTM 1457—62 T.

Die folgenden Beispiele sollen die Erfindung erläutern:

## Beispiele 1 bis 19

## Vergleichsbeispiele A bis E

In den Beispielen 1 bis 19 und den Vergleichsbeispielen A bis E wird nach der folgenden Vorschrift gearbeitet:

Die Polymerisation wird in einem emaillierten Polymerisationsreaktor mit einem Gesamtvolumen von 400 l durchgeführt. Der Polymerisationsreaktor ist mit einem Impellerrührer und einem zweiarmigen Stromstörer ausgerüstet. In den Reaktor werden 210 l entionisiertes Wasser vorgelegt, das 35 g Ammoniumcarbonat gelöst enthält. Der Reaktorinhalt wird auf eine Temperatur von 70°C gebracht. Die Luft im verbleibenden Gasraum wird durch mehrmaliges Aufpressen von Stickstoff verdrängt. Danach wird einmal TFE aufgedrückt und entspannt. Nun wird die rechnerisch bestimmte Menge an Perfluorpropylvinylether (PPVE) zugesetzt, die für die Einstellung der gewünschten Konzentration an PPVE im TFE in der Startphase der Polymerisation erforderlich ist. Danach wird TFE bis zu dem gewünschten Polymerisationsdruck aufgepreßt. Die Rührerdrehzahl wird auf 130 U/min (entsprechend einer spezifischen Leistungsaufnahme des Rührers von 1,6 W/l wäßriges Medium, gemessen im wäßrigen Medium vor dem Start der Polymerisation) eingestellt. Dann wird das als Katalysator verwendete Ammoniumpersulfat, gelöst in 100 ml entsalztem Wasser, in den Polymerisationsreaktor eingepumpt. Nach dem Start der Polymerisation wird der Polymerisationsdruck durch Nachspeisen von TFE und die Polymerisationstemperatur durch Kühlung automatisch konstant gehalten. Die zugeführte Menge an TFE wird über eine Blende gemessen und registriert. Übersteigt die durch den gewünschten Einbau festgelegte Gesamtmenge an PPVE die vorgelegte Menge, so wird die verbleibende Restmenge im weiteren Verlauf der Polymerisation nachgeschleust. Ist die gewünschte Menge an Polymerisat, bezogen auf eingesetztes wäßriges Polymerisationsmedium erreicht, wird die Reaktion durch Entspannen des TFE abgebrochen. Das im Gasraum des Polymerisationsreaktors verbleibende Tetrafluorethylen wird durch Stickstoff verdrängt.

Das erhaltene Polymerisatpulver wird vom wäßrigen Polymerisationsmedium getrennt, dreimal mit 100 l entsalztem Wasser gewaschen und in einem Umlufttrockenschrank 10 Stunden bei 250°C getrocknet. Die bei der Polymerisation in untergeordneter Menge entstandenen Grobanteile mit einem Teilchendurchmesser über 3000 μm werden abgesiebt.

In Tabelle I sind die Polymerisationsbedingungen für die Beispiele 1 bis 19 und die Vergleichsbeispiele A bis E wiedergegeben. Abweichungen von der obengenannten Vorschrift und zusätzliche Bedingungen sind in Fußnoten vermerkt. Tabelle III enthält die Eigenschaften der hergestellten TFE-Polymerisat-Pulver.

Wie in den Fußnoten zu Tabelle I vermerkt, ist im Beispiel 18 Perfluorethylvinylether anstelle von PPVE eingesetzt worden, in den Vergleichsversuchen C und D Hexafluorpropylen, im Vergleichsversuch E Chlortrifluorethylen. In Tabelle III bedeutet das Zeichen ∞ in der Zeile » Rieselfähigkeit«, daß der Pulverausfluß während der Bestimmung stockt. Eine unter den Testbedingungen arbeitende automatische Dosiervorrichtung hätte hier eine Betriebsstörung. Die nach den Vergleichsversuchen A bis E erhaltenen Pulver bestehen zum überwiegenden Teil aus Grobanteilen >3000 μm. Diese wurden daher hier nicht abgetrennt.

Tabelle I

Herstellungsbedingungen der Polymerisate

| | Beispiel Nr. 1 | 2 | 3 | 4[1]) | 5 | 6 | 7 | 8 | 9 | 10[2]) |
|---|---|---|---|---|---|---|---|---|---|---|
| Rechnerische Konzentration an PPVE in der Startphase (Vol.-%) | 0,14 | 0,2 | 0,14 | 0,14 | 0,14 | 0,17 | 0,2 | 0,39 | 0,11 | 0,14 |
| Polymerisationsdruck (bar) | 10 | 7 | 10 | 10 | 10 | 8,5 | 7 | 7 | 7 | 10 |
| Beim Start der Polymerisation eingesetzte Menge an PPVE (g) | 25,5 | 25,5 | 25,5 | 25,5 | 25,5 | 25,5 | 25,5 | 49 | 13,6 | 25,5 |
| Nachdosierte Gew.-Menge an PPVE (g)/zugegeben bei Gew.-% gebildetem Polymerisat-Feststoff | 0 | 0 | 17/15 | 17/15 | 4/15 | 17/15 | 17/15 | 0 | 14/15 | 0 |
| Gesamtmenge an zugegebenem PPVE in Gew.-Teilen pro Million Gew.-Teile verbrauchte TFE | 403 | 413 | 652 | 637 | 694 | 685 | 634 | 997 | 405 | 419 |
| Eingebaute Gesamtmenge an PPVE im Polymerisat (Mol-%) | 0,0041 | 0,0045 | 0,0144 | 0,0107 | 0,094 | 0,0157 | 0,0075 | 0,0116 | 0,0075 | 0,0040 |
| Gebildeter Polymerisat-Feststoff, bezogen auf eingesetztes wäßriges Polymerisationsmedium (Gew.-%) | 30,1 | 29,4 | 31,0 | 31,8 | 20,2 | 29,5 | 32,0 | 23,4 | 32,4 | 29,0 |
| Eingesetzte Menge an Ammoniumpersulfat (g) | 2,2 | 2,2 | 1,9 | 1,9 | 1,9 | 2,6 | 3,2 | 3,8 | 2,6 | 1,9 |
| Polymerisationsdauer (h) | 3,7 | 5,0 | 4,0 | 4,1 | 3,0 | 4,2 | 4,5 | 4,0 | 4,1 | 4,6 |

Fortsetzung

| | Beispiel Nr. 11 | 12 | 13 | 14[3]) | 15[3]) | 16[3]) | 17[3]) | 18[4]) | 19 |
|---|---|---|---|---|---|---|---|---|---|
| Rechnerische Konzentration an PPVE in der Startphase (Vol.-%) | 0,14 | 0,27 | 0,54 | 0,17 | 0,25 | 0,47 | 0,94 | 0,14 | 0,14 |
| Polymerisationsdruck (bar) | 10 | 10 | 10 | 10 | 10 | 10 | 10 | 10 | 10 |
| Beim Start der Polymerisation eingesetzte Menge an PPVE (g) | 25,5 | 49 | 98 | 23 | 33 | 63 | 125 | 20,7 | 25,5[5]) |
| Nachdosierte Gew.-Menge an PPVE (g)/ zugegeben bei Gew.-% gebildetem Polymerisat-Feststoff | 36/10<br>36/20 | 49/12 | 0 | 83/6<br>83/18 | 49/3<br>49/10 | 62/12 | 0 | 14/15 | 17/15 |
| Gesamtmenge an zugegebenem PPVE in Gew.-Teilen pro Million Gew.-Teile verbrauchtes TFE | 4162 | 1933 | 1903 | 3050 | 2079 | 2189 | 2042 | 485 | 620 |
| Eingebaute Gesamtmenge an PPVE im Polymerisat (Mol-%) | 0,0270 | 0,0374 | 0,0376 | 0,0575 | 0,0272 | 0,0399 | 0,0379 | 0,0092 | 0,0092 |
| Gebildeter Polymerisat-Feststoff, bezogen auf eingesetztes wäßriges Polymerisationsmedium (Gew.-%) | 31,8 | 24,1 | 24,5 | 23,8 | 24,2 | 22,0 | 23,5 | 34,0 | 32,6 |
| Eingesetzte Menge an Ammoniumpersulfat (g) | 3,0 | 3,8 | 3,8 | 6,0 | 4,4 | 4,8 | 4,8 | 1,9 | 1,9 |
| Polymerisationsdauer (h) | 4,0 | 3,5 | 3,6 | 4,7 | 4,0 | 3,5 | 4,1 | 3,6 | 4,0 |

Fortsetzung

Herstellungsbedingungen der Polymerisate — Vergleichsversuche

| | Beispiel Nr. A | B | C[6]) | D[6]) | E[7]) |
|---|---|---|---|---|---|
| Rechnerische Konzentration an PPVE in der Startphase (Vol.-%) | 0 | 0,01 | 0,1 | 1,0 | 0,3 |
| Polymerisationsdruck (bar) | 10 | 10 | 10 | 10 | 10 |
| Beim Start der Polymerisation eingesetzte Menge an PPVE (g) | 0 | 2 | 10 | 100 | 32 |
| Nachdosierte Gew.-Menge an PPVE (g)/zugegeben bei Gew.-% gebildetem Polymerisat-Feststoff | 25,5/1,7 | 0 | 0 | 0 | 0 |
| Gesamtmenge an zugegebenem PPVE in Gew.-Teilen pro Million Gew.-Teile verbrauchtes TFE | 526 | 29 | 205 | 2183 | 610 |
| Eingebaute Gesamtmenge an PPVE im Polymerisat (Mol-%) | nicht best. | nicht best. | nicht best. | nicht best. | nicht best. |
| Gebildeter Polymerisat-Feststoff, bezogen auf eingesetztes, wäßriges Polymerisationsmedium (Gew.-%) | 23,1 | 32,6 | 23,1 | 21,8 | 24,8 |
| Eingesetzte Menge an Ammoniumpersulfat (g) | 0,8 | 0,6 | 1,9 | 1,9 | 1,2 |
| Polymerisationsdauer (h) | 5,0 | 3,7 | 2,3 | 2,8 | 3,2 |

[1]) In Beispiel 4 betrug die Rührerdrehzahl 165 U/min statt 130 U/min.
[2]) In Beispiel 10 wurden dem wäßrigen Polymerisationsmedium 4 TpM Perfluoroctansäure zugesetzt.
[3]) Bei den Beispielen 14 bis 17 wurden 260 l wäßriges Polymerisationsmedium eingesetzt, in dem 44 g Ammoniumcarbonat gelöst waren.
[4]) Perfluorethylvinylether statt PPVE.
[5]) Nachdosiert bei 35 Gew.% an gebildetem Polymerisat-Feststoff.
[6]) Mit Hexafluorpropylen anstatt PPVE.
[7]) Mit Chlortrifluorethylen anstatt PPVE.

## Beispiele 20 bis 24

(siehe auch die Angaben zur Versuchsdurchführung in Tabelle II)

Die Polymerisation wird in einem emaillierten Polymerisationsreaktor mit einem Gesamtvolumen von 400 l durchgeführt. Der Polymerisationsreaktor ist mit einem Impellerrührer und einem zweiarmigen Stromstörer ausgerüstet. Im Reaktor werden 260 l entionisiertes Wasser vorgelegt, das 44 g Ammoniumcarbonat gelöst enthält. Der Reaktorinhalt wird auf eine Temperatur von 70°C gebracht. Die Luft im verbleibenden Gasraum wird durch mehrmaliges Aufpressen von Stickstoff verdrängt. Danach wird einmal TFE aufgedrückt und entspannt. Nun wird die rechnerisch bestimmte Menge an PPVE zugesetzt, die für die Einstellung der gewünschten Konzentration an PPVE im TFE in der Startphase der Polymerisation erforderlich ist. Danach wird TFE bis zu dem Polymerisationsdruck von 10 bar aufgepreßt. Die Rührerdrehzahl wird auf den Wert eingestellt, der sich aus der gewünschten spezifischen Leistungsaufnahme (SL) ergibt. Dann wird das als Katalysator verwendete Ammoniumpersulfat, gelöst in 100 ml entsalztem Wasser, in den Polymerisationsreaktor eingepumpt. Nach dem Start der Polymerisation wird der Polymerisationsdruck von 10 bar durch Nachspeisen von TFE und die Polymerisationstemperatur durch Kühlung automatisch konstant gehalten. Die Rührerdrehzahl wird gegebenenfalls, wie in Tabelle II angegeben, bei Erreichen der ebenfalls dort angeführten Polymerisat-Feststoffgehalte während des Polymerisationsverlaufs geändert. Die zugeführte Menge an TFE wird über eine Blende gemessen und registriert. Übersteigt die durch den gewünschten Einbau festgelegte Gesamtmenge an PPVE die vorgelegte Menge, so wird die verbleibende Restmenge im weiteren Verlauf der Polymerisation nachgeschleust. Ist die gewünschte Menge an Polymerisat, bezogen auf eingesetztes wäßriges Polymerisationsmedium, erreicht, wird die Reaktion durch Entspannen des TFE abgebrochen. Das im Gasraum des Polymerisationsreaktors verbleibende Tetrafluorethylen wird durch Stickstoff verdrängt.

Das erhaltene Polymerisat-Pulver wird vom wäßrigen Polymerisationsmedium getrennt, dreimal mit 100 l entsalztem Wasser gewaschen und in einem Umlufttrockenschrank 10 Stunden bei 250°C getrocknet. Die bei der Polymerisation in untergeordneter Menge entstandenen Grobanteile mit einem Teilchendurchmesser über 3000 μm werden abgesiebt.

Tabelle III enthält die Eigenschaften der hergestellten TFE-Polymerisat-Pulver.

## Beispiel 25

Die Polymerisation wird in einem emaillierten Polymerisationsreaktor mit einem Gesamtvolumen von 220 l durchgeführt. Der Polymerisationsreaktor ist mit einem Impellerrührer und einem zweiarmigen Stromstörer ausgerüstet. In den Reaktor werden 118 l entionisiertes Wasser vorgelegt, das 20 g Ammoniumcarbonat gelöst enthält. Polymerisation und Aufarbeitung des gewonnenen Polymerisatpulvers werden in Analogie zu den Beispielen 20 bis 24 durchgeführt. Die Rührerdrehzahl und die dazugehörige spezifische Leistungsaufnahme sowie die sonstigen Polymerisationsbedingungen sind in Tabelle II angegeben. Tabelle III enthält die Eigenschaften des hergestellten Polymerisats.

Tabelle II

Herstellungsbedingungen der Polymerisate

| | Beispiel Nr. 20 | | | 21 | | | 22*) | | |
|---|---|---|---|---|---|---|---|---|---|
| | SL (Watt/l) | Rührer-drehzahl (U/min) | von/bis Feststoff-gehalt (Gew.-%) | SL (Watt/l) | Rührer-drehzahl (U/min) | von/bis Feststoff-gehalt (Gew.-%) | SL (Watt/l) | Rührer-drehzahl (U/min) | von/bis Feststoff-gehalt (Gew.-%) |
| Rührbedingungen | 2,75<br>1,06<br>2,79 | 165<br>120<br>165 | 0 – 1,5<br>1,5–12,0<br>12,0–41,8 | 2,79<br>0,59<br>0,59 | 165<br>100<br>100 | 0 – 1,5<br>1,5–12,0<br>12,0–32,7 | 1,06<br>1,06<br>1,06 | 120<br>120<br>120 | 0 – 1,5<br>1,5–12,0<br>12,0–29,6 |
| Rechnerische Konzentration an PPVE in der Startphase (Vol.-%) | | 0,22 | | | 0,15 | | | 0,15 | |
| Beim Start der Polymerisation eingesetzte Menge an PPVE (g) | | 29 | | | 22 | | | 22 | |
| Nachdosierte Gew.-Menge an PPVE (g)/zugegeben bei Gew.-% an gebildetem Polymerisat-Feststoff | | 19,0/ 5,2<br>19,0/18,8 | | | 16,6/ 3,3<br>16,6/14,7 | | | 16,6/ 2,8<br>16,6/13,6 | |
| Gesamtmenge an zugegebenen PPVE in Gew.-Teilen pro Million Gew.-Teile verbrauchte TFE | | 616 | | | 647 | | | 716 | |
| Eingebaute Gesamtmenge an PPVE im Polymerisat (Mol-%) | | 0,0164 | | | 0,0159 | | | 0,0159 | |
| Gebildeter Polymerisat-Feststoff, bezogen auf eingesetztes, wäßriges Polymerisationsmedium (Gew.-%) | | 41,8 | | | 32,7 | | | 29,6 | |
| Eingesetzte Menge an Ammoniumpersulfat (g) | | 2,4 | | | 2,2 | | | 5,0 | |
| Polymerisationsdauer (h) | | 6,2 | | | 5,2 | | | 4,9 | |

Fortsetzung

| | Beispiel Nr. 23*) | | | 24 | | | 25*) | | |
|---|---|---|---|---|---|---|---|---|---|
| | SL (Watt/l) | Rührer-drehzahl (U/min) | von/bis Feststoff-gehalt (Gew.-%) | SL (Watt/l) | Rührer-drehzahl (U/min) | von/bis Feststoff-gehalt (Gew.-%) | SL (Watt/l) | Rührer-drehzahl (U/min) | von/bis Feststoff-gehalt (Gew.-%) |
| | Rührbedingungen | | | | | | | | |
| | 2,79<br>1,06<br>1,63 | 165<br>120<br>140 | 0 – 1,5<br>1,5–12,0<br>12,0–28,9 | 2,79<br>1,06<br>2,79 | 165<br>120<br>165 | 0 – 2,0<br>2,0– 8,0<br>8,0–40,6 | 2,79<br>0,76<br>2,0 | 210<br>155<br>190 | 0 – 3,0<br>3,0–12,0<br>12,0–29,8 |
| Rechnerische Konzentration an PPVE in der Startphase (Vol.-%) | | 0,15 | | | 0,15 | | | 0,13 | |
| Beim Start der Polymerisation eingesetzte Menge an PPVE (g) | | 22 | | | 22 | | | 10,0 | |
| Nachdosierte Gew.-Menge an PPVE (g)/zugegeben bei Gew.-% an gebildetem Polymerisat-Feststoff | | 16,6/ 2,8<br>16,6/13,6 | | | 22/ 5,2<br>22/18,5 | | | 7,5/ 2,9<br>7,5/13,6 | |
| Gesamtmenge an zugegebenen PPVE in Gew.-Teilen pro Million Gew.-Teile verbrauchtes TFE | | 733 | | | 625 | | | 710 | |
| Eingebaute Gesamtmenge an PPVE im Polymerisat (Mol-%) | | 0,0180 | | | 0,0167 | | | 0,0143 | |
| Gebildeter Polymerisat-Feststoff, bezogen auf eingesetztes, wäßriges Polymerisationsmedium (Gew.-%) | | 29,1 | | | 40,6 | | | 29,8 | |
| Eingesetzte Menge an Ammoniumpersulfat (g) | | 5,4 | | | 4,4 | | | 2,4 | |
| Polymerisationsdauer (h) | | 5,8 | | | 6,4 | | | 3,4 | |

*) Es wurden 3 TpM Perfluoroctansäure dem wäßrigen Polymerisationsmedium zugesetzt.

Tabelle III

Eigenschaften der Polymerisat-Pulver

| | Beispiel Nr. 1 | 2 | 3 | 4 | 5 | 6 | 7 | 8 | 9 | 10 |
|---|---|---|---|---|---|---|---|---|---|---|
| Schüttgewicht (g/l) | 590 | 650 | 590 | 570 | 570 | 640 | 700 | 670 | 660 | 630 |
| Siebanalyse (Gew.-%) | | | | | | | | | | |
| >3000 μm | 6,5 | 11,0 | 6,0 | 6,5 | 5,4 | 5,5 | 10,3 | 6,2 | 6,6 | 13,5 |
| >2000 μm | 2,8 | 2,8 | 3,3 | 2,8 | 2,8 | 1,4 | 2,8 | 5,9 | 2,1 | 2,3 |
| >1400 μm | 27,4 | 4,8 | 33,9 | 5,2 | 27,9 | 7,6 | 4,4 | 7,1 | 20,4 | 8,1 |
| >1000 μm | 35,8 | 17,4 | 26,1 | 11,7 | 17,8 | 39,7 | 16,6 | 9,0 | 33,1 | 24,0 |
| > 800 μm | 9,9 | 16,2 | 11,1 | 19,2 | 4,3 | 15,9 | 15,3 | 13,0 | 6,9 | 27,4 |
| > 600 μm | 11,2 | 14,6 | 13,2 | 25,2 | 14,3 | 10,4 | 15,2 | 13,5 | 13,2 | 16,3 |
| > 500 μm | 5,4 | 12,2 | 4,7 | 17,2 | 15,7 | 11,3 | 14,7 | 10,1 | 12,8 | 6,3 |
| > 200 μm | 1,1 | 20,6 | 1,6 | 12,0 | 12,0 | 8,6 | 20,8 | 29,7 | 5,2 | 2,2 |
| < 200 μm | 0,1 | 0,4 | 0,1 | 0,1 | 0,1 | – | 0,1 | 3,5 | – | – |
| Mittlerer Teilchendurchmesser $d_{50}$ (μm) | 1210 | 700 | 1200 | 725 | 910 | 980 | 650 | 605 | 1070 | 910 |
| Rieselfähigkeit (s/50 g) | 4,2 | 3,8 | 4,5 | 5,0 | 4,8 | 3,5 | 3,4 | 3,8 | 4,2 | 4,0 |
| Kornstabilität (s/50 g) | 4,3 | 3,9 | 4,5 | 5,2 | 4,9 | 3,7 | 3,5 | 3,9 | 4,2 | 4,0 |
| Spez. Schmelzviskosität (GPas) | 116 | 85 | 78 | 81 | 88 | 73 | 33 | 24 | 41 | 75 |
| Spez. Oberfläche ($m^2$/g) | 1,0 | 0,95 | 0,81 | 1,15 | 1,92 | 1,23 | 0,91 | 2,21 | 0,96 | 3,5 |

Fortsetzung

| | Beispiel Nr. 11 | 12 | 13 | 14 | 15 | 16 | 17 | 18 | 19 |
|---|---|---|---|---|---|---|---|---|---|
| Schüttgewicht (g/l) | 660 | 590 | 580 | 610 | 690 | 620 | 630 | 650 | 580 |
| Siebanalyse (Gew.-%) | | | | | | | | | |
| >3000 μm | 10,0 | 5,0 | 12,5 | 1,9 | 6,5 | 8,8 | 9,8 | 3,6 | 22,2 |
| >2000 μm | 1,1 | 3,7 | 5,3 | 0,2 | 9,7 | 4,0 | 4,9 | 3,8 | 8,3 |
| >1400 μm | 6,8 | 8,9 | 9,1 | 1,7 | 7,2 | 4,8 | 6,0 | 27,8 | 14,2 |
| >1000 μm | 23,6 | 10,6 | 9,1 | 19,8 | 9,6 | 6,1 | 6,2 | 49,6 | 13,5 |
| > 800 μm | 13,0 | 14,3 | 7,6 | 28,9 | 12,3 | 14,9 | 7,2 | 11,0 | 20,6 |
| > 600 μm | 10,9 | 14,4 | 0,7 | 20,0 | 14,1 | 7,9 | 3,0 | 1,8 | 15,5 |
| > 500 μm | 13,7 | 11,4 | 15,9 | 9,8 | 16,5 | 16,0 | 23,4 | 1,5 | 4,4 |
| > 200 μm | 20,3 | 27,9 | 32,2 | 9,3 | 18,9 | 25,8 | 28,2 | 1,0 | 1,2 |
| < 200 μm | 0,7 | 4,1 | 7,8 | 8,4 | 5,2 | 11,8 | 8,3 | – | – |
| Mittlerer Teilchendurchmesser $d_{50}$ (μm) | 705 | 650 | 475 | 800 | 675 | 530 | 500 | 1270 | 880 |
| Rieselfähigkeit (s/50 g) | 3,5 | 4,0 | 5,0 | 3,8 | 3,4 | 4,2 | 4,3 | 4,0 | 5,0 |
| Kornstabilität (s/50 g) | 3,5 | 4,1 | 5,0 | 3,9 | 3,6 | 4,2 | 4,5 | 4,3 | 5,2 |
| Spez. Schmelzviskosität (GPas) | 33 | 24 | 15 | 10 | 30 | 28 | 24 | 91 | 85 |
| Spez. Oberfläche ($m^2$/g) | 1,56 | 2,11 | 2,0 | 1,53 | 1,2 | 1,72 | 1,31 | 1,29 | 1,54 |

Fortsetzung

| | Beispiel Nr. 20 | 21 | 22 | 23 | 24 | 25 |
|---|---|---|---|---|---|---|
| Schüttgewicht (g/l) | 760 | 750 | 750 | 820 | 630 | 700 |
| Siebanalyse (Gew.-%) | | | | | | |
| >3000 μm | 12,1 | 21,0 | 7,2 | 15,0 | 14,7 | 14,8 |
| >2000 μm | 6,5 | 19,9 | 6,4 | 6,5 | 7,3 | 10,8 |
| >1400 μm | 23,5 | 14,5 | 24,6 | 8,2 | 6,9 | 20,6 |
| >1000 μm | 22,0 | 12,9 | 45,2 | 12,6 | 16,5 | 25,0 |
| > 800 μm | 14,1 | 7,8 | 15,2 | 14,9 | 9,9 | 15,6 |
| > 600 μm | 11,8 | 9,9 | 1,6 | 16,6 | 8,6 | 9,1 |
| > 500 μm | 6,5 | 6,8 | 0,1 | 14,5 | 6,6 | 3,0 |
| > 200 μm | 3,8 | 6,8 | – | 11,8 | 28,0 | 1,2 |
| < 200 μm | 0,1 | 0,2 | – | 0,1 | 1,6 | – |
| Mittlerer Teilchendurchmesser $d_{50}$ (μm) | 1170 | 1310 | 1200 | 1100 | 900 | 1100 |
| Rieselfähigkeit (s/50 g) | 3,1 | 2,9 | 3,0 | 2,8 | 3,2 | 3,1 |
| Kornstabilität (s/50 g) | 3,2 | 3,0 | 3,0 | 2,9 | 3,2 | 3,1 |
| Spez. Schmelzviskosität (GPas) | 130 | 112 | 95 | 106 | 120 | 108 |
| Spez. Oberfläche ($m^2/g$) | 0,72 | 0,92 | 0,84 | 1,23 | 0,8 | 1,1 |

Fortsetzung

Eigenschaften der Polymerisat-Pulver — Vergleichsversuche

| | Beispiel Nr. | | | | |
|---|---|---|---|---|---|
| | A | B | C | D | E |
| Schüttgewicht (g/l) | 480[1]) | 510[1]) | 410[1]) | 400[1]) | 530[1]) |
| Siebanalyse (Gew.-%) | | | | | |
| >3000 μm | 90,7 | 94,4 | 57,6 | 53,6 | 51,3 |
| >2000 μm | 4,1 | 5,3 | 41,5 | 44,7 | 40,7 |
| >1400 μm | 2,3 | 0,2 | 1,2 | 1,8 | 8,2 |
| >1000 μm | 2,3 | 0,1 | – | – | 0,1 |
| > 800 μm | 0,6 | – | – | – | – |
| > 600 μm | 0,2 | – | – | – | – |
| > 500 μm | – | – | – | – | – |
| > 200 μm | – | – | – | – | – |
| < 200 μm | – | – | – | – | – |
| Mittlerer Teilchendurchmesser $d_{50}$ (μm) | >3000[1]) | >3000[1]) | >3000[1]) | >3000[1]) | >3000[1]) |
| Rieselfähigkeit (s/50 g) | ∞[1])[2]) | ∞[1])[2]) | ∞[1])[2]) | ∞[1])[2]) | 6,1[1]) |
| Kornstabilität (s/50 g) | nicht best. | nicht best. | nicht best. | nicht best. | 7,0 |
| Spez. Schmelzviskosität (GPas) | 70 | 415 | nicht best. | nicht best. | nicht best. |
| Spez. Oberfläche ($m^2/g$) | 1,7 | 1,23 | nicht best. | nicht best. | nicht best. |

[1]) Bestimmt ohne Abtrennung des Grobanteils >3000 μm.
[2]) Pulver fließt nicht vollständig aus dem Trichter.

Vergleichsversuch A zeigt, daß ein sehr grobes Rohpolymerisat-Pulver mit einem mittleren Teilchendurchmesser von über 3000 μm entsteht, wenn überhaupt kein PPVE in der Startphase der Polymerisation zugegen ist. Die Zugabe von 25,5 g PPVE nach Bildung von 1,7% Polymerisat, bezogen auf wäßriges Polymerisationsmedium, übt praktisch keinen Einfluß mehr auf die Pulvereigenschaften aus. Das Schüttgewicht des groben Polymerisatpulvers, das als solches für die Ram-Extrusion praktisch ungeeignet ist, liegt bei 480 g/l. Die Rieselfähigkeit zeigt den Wert ∞, das heißt die Rieselfähigkeit ist extrem schlecht. Ein ähnliches Ergebnis erhält man, wenn man nur 29 Gew.-TpM PPVE zu Beginn der Startphase der Polymerisation einsetzt (Vergleichsbeispiel B). Die Vergleichsbeispiele C und D zeigen, daß durch Einsatz von 0,1 bis 1 Vol.-% an Hexafluorpropylen in der Startphase der Polymerisation die Kornbeschaffenheit nicht im gewünschten Sinne beeinflußt werden kann. Die mit Hexafluorpropylen hergestellten Produkte sind sehr grob und zeigen ein niedriges Schüttgewicht von etwa 400 g/l und eine extrem schlechte Rieselfähigkeit. Der Einsatz von 0,3 Vol.-% an Chlortrifluorethylen in der Startphase (Vergleichsversuch E) führt ebenfalls zu einem zu groben Pulver, dessen Schüttgewicht und Rieselfähigkeit den genannten praktischen Anforderungen nicht entsprechen.

Die erfindungsgemäßen Rohpolymerisat-Pulver lassen sich zu Ram-Extrudaten mit überragenden mechanischen Festigkeitswerten verarbeiten. Es wurden durch Ram-Extrusion Stäbe relativ dünnen Durchmessers unter folgenden Bedingungen hergestellt:

Extrusionsbedingungen:
Vertikalextruder der Fa. Frieske & Hoepfner

| | |
|---|---|
| Werkzeugdurchmesser | 23 mm |
| Werkzeuglänge | 1800 mm |
| Länge der Heizzone | 1100 mm |
| Temperatur | |
| Zone 1 | 370°C |
| Zone 2 | 380°C |
| Zone 3 | 380°C |
| mittlerer Ausstoß | 2 m/h |
| Bremsdruck | 2 bar |

Aus den folgenden Ergebnissen wird die Überlegenheit der erfindungsgemäßen Pulver deutlich:

| Produkt hergestellt nach | Beispiel 7 | Beispiel 17 | Vergleichsversuch | | | |
|---|---|---|---|---|---|---|
| | | | B | C | D | E |
| Reißfestigkeit ($N/mm^2$) längs | 28,5 | 28,5 | 19,7 | 21,1 | 20,1 | 18,3 |
| Reißdehnung (%) längs | 425 | 475 | 270 | 280 | 280 | 235 |

Weiterhin werden auch dickere Stäbe unter folgenden Bedingungen ramextrudiert:

| | |
|---|---|
| Werkzeugdurchmesser | 46 mm |
| Werkzeuglänge | 1800 mm |
| Länge der Heizzone | 1200 mm |
| Temperatur | |
| Zone 1 | 380°C |
| Zone 2 | 390°C |
| Zone 3 | 390°C |
| mittlerer Ausstoß | 1,3 m/h |
| Bremsdruck | 5,5 bar |

Die Ergebnisse waren folgende:

| Produkt hergestellt nach | Beispiel 4 | Beispiel 19 |
|---|---|---|
| Reißfestigkeit ($N/mm^2$) | | |
| längs | 28,3 | 30,4 |
| quer | 31,4 | 29,5 |
| Reißdehnung (%) | | |
| längs | 440 | 510 |
| quer | 520 | 535 |
| Spez. Extrusionsdruck (bar) | 95 | 130 |

**Patentansprüche**

1. Körniges, rieselfähiges, aus der Schmelze nicht verarbeitbares Rohpolymerisat-Pulver eines Tetrafluorethylen-Polymerisates, bestehend aus 0,004 bis 0,075 Mol-% polymerisierten Einheiten eines Perfluoralkylvinylethers der Formel

$$CF_2{=}CF{-}O{-}R_f \qquad (I)$$

worin $R_f$ einen Perfluorethyl-, Perfluor-n-propyl- oder Perfluor-n-butyl-Rest bedeutet, und aus polymerisierten Tetrafluorethylen-Einheiten, mit einer spezifischen Oberfläche von 0,5 bis 4,5 $m^2/g$, dadurch gekennzeichnet, daß es einen mittleren Teilchendurchmesser $d_{50}$ von 450 bis 1400 μm, ein Schüttgewicht von 670 bis 880 g/l, eine Rieselfähigkeit von 4,0 bis 2,5 s/50 g und eine Kornstabilität von 4,0 bis 2,5 s/50 g besitzt.

2. Körniges, rieselfähiges, aus der Schmelze nicht verarbeitbares Rohpolymerisat-Pulver eines Tetrafluorethylen-Polymerisats gemäß Anspruch 1, dadurch gekennzeichnet, daß es ein Schüttgewicht von 750 bis 880 g/l, eine Rieselfähigkeit von 3,5 bis 2,5 s/50 g und eine Kornstabilität von 3,5 bis 2,5 s/50 g besitzt.

3. Körniges, rieselfähiges, aus der Schmelze nicht verarbeitbares Rohpolymerisat-Pulver eines Tetrafluorethylen-Polymerisats gemäß Anspruch 1, dadurch gekennzeichnet, daß es einen mittleren Teilchendurchmesser $d_{50}$ von 600 bis 1200 μm aufweist.

4. Körniges, rieselfähiges, aus der Schmelze nicht verarbeitbares Rohpolymerisat-Pulver eines Tetrafluorethylen-Polymerisats gemäß Anspruch 1, dadurch gekennzeichnet, daß die polymerisierten Einheiten solche des Perfluor-n-propylvinylethers sind.

5. Verfahren zur Herstellung eines körnigen, rieselfähigen, aus der Schmelze nicht verarbeitbaren Rohpolymerisat-Pulvers eines Tetrafluorethylen-Polymerisates gemäß Anspruch 1 durch Suspensionspolymerisation eines Monomerengemisches, bestehend aus einem Perfluoralkylvinylether der Formel

$$CF_2{=}CF{-}O{-}R_f \qquad (I)$$

worin $R_f$ einen Perfluorethyl-, Perfluor-n-propyl- oder Perfluor-n-butyl-Rest bedeutet, und aus Tetrafluorethylen, in wäßrigem Medium unter Rühren in Gegenwart üblicher, freie Radikale bildender Katalysatoren, Puffersubstanzen und gegebenenfalls von telogen inaktiven, fluorierten Emulgatoren in Mengen bis zu 40 TpM, sowie durch anschließende Abtrennung des pulverförmigen Polymerisats vom wäßrigen Medium und durch Abtrennung übergroßer Teilchen mit einem Teilchendurchmesser von größer als 3000 μm, dadurch gekennzeichnet, daß

a) die Konzentration in der Gasphase an gasförmigem Perfluoralkylvinylether der Formel I im Monomerengemisch mit Tetrafluorethylen in dem Zeitraum bis zur Bildung von 1,5 Gew.-% Polymerisat-Feststoff, bezogen auf das wäßrige Medium, auf einen rechnerisch ermittelten Wert von 0,1 bis 1,0 Vol.-% eingestellt wird, und die Polymerisation dann unter Zuführung von Tetrafluorethylen und gegebenenfalls von Perfluoralkylvinylether der Formel I fortgesetzt wird, wobei die Gesamtmenge der zugeführten beiden Monomeren so zu bemessen ist, daß ein Polymerisat mit

einem Gehalt von 0,004 bis 0,075 Mol-% an polymerisierten Perfluoralkylvinylether-Einheiten der Formel I und an polymerisierten Tetrafluorethylen-Einheiten gebildet wird, und

b) die Polymerisation bei einem Gesamtdruck von 5 bis 11 bar durchgeführt wird, und

c) in einer Phase des Polymerisationsverlaufs, beginnend bei Bildung von 1,5 bis 3 Gew.-% und sich erstreckend bis zur Bildung von 8 bis 12 Gew.-% an Polymerisat-Feststoff, bezogen auf das wäßrige Medium, eine Rührerdrehzahl eingehalten wird, die einer spezifischen Leistungsaufnahme von 0,5 bis 1,5 Watt/l wäßriges Medium, gemessen im wäßrigen Medium vor dem Start der Polymerisation, entspricht.

6. Verfahren nach Anspruch 5, dadurch gekennzeichnet, daß die Konzentration an gasförmigem Perfluoralkylvinylether der Formel I auf einen rechnerisch ermittelten Wert von 0,1 bis 0,45 Vol.-% eingestellt wird.

7. Verfahren nach Anspruch 5, dadurch gekennzeichnet, daß die Suspensionspolymerisation vom Start bis zur Bildung von 1,5 Gew.-% Polymerisat-Feststoff, bezogen auf wäßriges Medium, mit einer Rührerdrehzahl durchgeführt wird, die einer höheren spezifischen Leistungsaufnahme, gemessen am wäßrigen Medium vor dem Start der Polymerisation, entspricht, als sie in der in Anspruch 5 definierten Phase des Polymerisationsverlaufs angewandt wird.

8. Verwendung der Rohpolymerisat-Pulver gemäß Anspruch 1 bis 4 zur Herstellung von Ram-Extrudaten.

## Claims

1. A granular, free-flowing, non-melt-fabricable raw polymer powder of a tetrafluoroethylene polymer, consisting of 0.004 to 0.075 mole % of polymerised units of a perfluoroalkyl vinyl ether of the formula

$$CF_2{=}CF{-}O{-}R_f \qquad (I)$$

wherein $R_f$ denotes a perfluoroethyl, perfluoro-n-propyl or perfluoro-n-butyl radical, and of polymerised tetrafluoroethylene units, and having a specific surface area of 0.5 to 4.5 $m^2/g$, characterised by an average particle diameter $d_{50}$ of 450 to 1.400 $\mu m$ a bulk density of from 670 to 880 g/l, a powder flow index of from 4.0 to 2.5 seconds/50 g and a grain stability of from 4.0 to 2.5 seconds/50 g.

2. A granular, free-flowing, non-melt-fabricable raw polymer powder of a tetrafluoroethylene polymer as claimed in claim 1, characterised by a bulk density of from 750 to 880 g/l, a powder flow index of from 3.5 to 2.5 seconds/50 g and a grain stability of from 3.5 to 2.5 seconds/50 g.

3. A granular, free-flowing, non-melt-fabricable raw polymer powder of a tetrafluoroethylene polymer as claimed in claim 1, characterised by an average particel diameter $d_{50}$ of from 600 to 1.200 $\mu m$.

4. A granular, free-flowing, non-melt-fabricable raw polymer powder of a tetrafluoroethylene polymer as claimed in claim 1, characterised in that the polymerised units are units of perfluoro-n-propyl vinyl ether.

5. A process for preparing a granular, free-flowing, non-melt-fabricable raw polymer powder of a tetrafluoroethylene polymer as claimed in claim 1, by suspension polymerising a monomer mixture consisting of a perfluoroalkyl vinyl ether of the formula

$$CF_2{=}CF{-}O{-}R_f \qquad (I)$$

wherein $R_f$ is a perfluoroethyl, perfluoro-n-propyl or perfluoro-n-butyl radical, and of tetrafluoroethylene, in an agitated aqueous medium in the presence of customary free-radical forming catalysts, buffer substances and, optionally, fluorinated telogenically-inactive emulsifiers in quantities of up to 40 ppm, and by subsequently separating the pulverulent polymer from the aqueous medium and by removing oversized particles having a particle diameter greater than 3.000 $\mu m$, characterised by

a) adjusting the concentration in the gas phase of the gaseous perfluoroalkyl vinyl ether of the formula I in the mixture of monomers containing tetrafluoroethylene i a period of the polymerisation until 1.5% by weight of solid polymer, calculated on the aqueous medium, has been formed, to an arithmetical value of 0.1 to 1.0% by volume and then continuing the polymerisation by supplying tetrafluoroethylene and, if appropriate, the perfluoroalkyl vinyl ether of the formula I, the total quantity of the two monomers supplied being in a proportion capable of forming a polymer having a content of from 0.004 to 0.075 mole % of polymerised units of perfluoroalkyl vinyl ether of the formula I and of polymerised tetrafluoroethylene units,

b) conducting the polymerisation under a total pressure of from 5 to 11 bars, and

c) maintaining in a phase of the progress of the polymerisation starting at the formation of 1.5 to 3% by weight of solid polymer and extending up to the formation of 8 to 12% by weight of solid polymer, calculated on the aqueous medium, a rotational speed of the stirrer which

corresponds to a specific power input of 0.5 to 1.5 watts/l of aqueous medium, this figure being measured in the aqueous medium before the start of the polymerisation.

6. The process as claimed in claim 5, characterised in that the concentration of gaseous perfluoroalkyl vinyl ether of the formula I is adjusted to a calculated value of 0.1 to 0.45% by volume.

7. The process as claimed in claim 5, characterised in that the suspension polymerisation is carried out from its start up to the formation of 1.5% by weight of solid polymer, calculated on aqueous medium, at a stirrer rotation speed which corresponds to a specific power input, measured on the aqueous medium before the start of the polymerisation which is higher than the level used in the phase, defined in claim 5, of the course of the polymerisation.

8. The use of the raw polymer powders as claimed in any of claim 1 to 4 for the production of ram-extruded articles.

**Revendications**

1. Poudre de polymère brut granulaire, à écoulement libre, non moulable à partir de l'état fondu à base d'un polymère de tétrafluoréthylène, constituée par 0,004 à 0,075% molaire d'unités polymérisées d'un perfluoroalkyl éther vinylique de formule

$$CF_2{=}CF{-}O{-}R_f \qquad (I)$$

dans laquelle $R_f$ représente un reste perfluoroéthyle, perfluoro-n-propyle ou perfluoro-n-butyle et par des unités de tétrafluoréthylène polymérisées, avec une aire spécifique de 0,5 à 4,5 $m^2/g$, caractérisée en ce qu'elle possède un diamètre moyen de particule $d_{50}$ de 450 à 1400 μm, une masse volumique apparente de 670 à 880 g/l, une aptitude à l'écoulement libre de 4,0 à 2,5 s/50 g et une stabilité de grain de 4,0 à 2,5 s/50 g.

2. Poudre de polymère brut granulaire, à écoulement libre, non moulable à partir de l'état fondu à base d'un polymère de tétrafluoréthylène selon la revendication 1, caractérisée en ce qu'elle possède une masse volumique apparente de 750 à 880 g/l, une aptitude à l'écoulement libre de 3,5 à 2,5 s/50 g et une stabilité de grain de 3,5 à 2,5 s/50 g.

3. Poudre de polymère brut granulaire, à écoulement libre, non moulable à partir de l'état fondu à base d'un polymère de tétrafluoréthylène selon la revendication 1, caractérisée en ce qu'elle présente un diamètre moyen de particule $d_{50}$ de 600 à 1200 μm.

4. Poudre de polymère brut granulaire, à écoulement libre, non moulable à partir de l'état fondu à base d'un polymère de tétrafluoréthylène selon la revendication 1, caractérisée en ce que les unités polymérisées sont des unités de perfluoro-n-propyl éther vinylique.

5. Procédé pour la préparation d'une poudre de polymère brut granulaire, à écoulement libre, non moulable à l'état fondu à base d'un polymère de tétrafluoréthylène selon la revendication 1, par polymérisation en suspension d'un mélange de monomères consistant en un perfluoroalkyl éther vinylique de formule

$$CF_2{=}CF{-}O{-}R_f \qquad (I)$$

dans laquelle $R_f$ représente un reste perfluoréthyle, perfluoro-n-propyle ou perfluoro-n-butyle et en tétrafluoréthylène, sous agitation en milieu aqueux en présence des catalyseurs générateurs de radicaux libres habituels, de substances tampons et éventuellement d'émulsifiants fluorés inactifs comme télogènes, à des doses allant jusqu'à 40 ppm, ainsi que par séparation consécutive du polymère pulvérulent du milieu aqueux et séparation des particules surdimensionnées d'un diamètre de particule supérieur à 3000 μm, le procédé étant caractérisé en ce que

a) la concentration, dans la phase gazeuse, du perfluoroalkyl éther vinylique gazeux de formule I dans le mélange de monomères avec du tétrafluoréthylène dans l'intervalle de temps jusqu'à la formation de 1,5% en poids de polymère solide, rapportés au milieu aqueux, est ajustée à une valeur de 0,1 à 1% en volume déterminée par calcul et que la polymérisation se poursuit ensuite par un apport de tétrafluoréthylène et éventuellement de perfluoroalkyl éther vinylique de formule I, moyennant quoi la quantité totale des deux monomères chargés devra être dosée de manière qu'il se forme un polymère avec une teneur en 0,004 à 0,75% molaire d-unités de perfluoroalkyl éther vinylique de formule I polymérisées et d'unités de tétrafluoréthylène polymérisées,
b) la polymérisation est conduite sous une pression totale de 5 à 11 bars et
c) on maintient dans une phase du processus de polymérisation débutant par la formation de 1,5 à 3% en poids et s'étendant jusqu'à la formation de 8 à 12% en poids de polymère solide, rapportés au milieu aqueux, une vitesse de rotation de l'agitateur correspondant à une absorption de puissance spécifique de 0,5 à 1,5 watts/l de milieu aqueux, déterminée dans le milieu aqueux avant le démarrage de la polymérisation.

6. Procédé selon la revendication 5, caractérisé en ce que la concentration en perfluoroalkyl éther vinylique de formule I est ajustée à une valeur de 0,1 à 0,45% en volume, déterminée par calcul.

7. Procédé selon la revendication 5, caractérisé en ce que l'on effectue la polymérisation en suspension, du début jusqu'à la formation de 1,5% en poids de matière solide de polymère par rapport au milieu aqueux, avec une vitesse de rotation de l'agitateur qui correspond à une absorption de puissance spécifique, mesurée dans le milieu aqueux avant le démarrage de la polymérisation, plus élevée que celle utilisée dans la phase du processus de polymérisation définie dans la revendication 5.

8. Utilisation des poudres de polymère brut selon les revendications 1 à 4 pour la préparation d'extrudats par frittage.